# EUROPEAN PATENT SPECIFICATION

(11) **EP 2 945 488 B1**
(45) Date of publication and mention of the grant of the patent: **25.04.2018**
(21) Application number: 14718477.4
(22) Date of filing: 15.01.2014
(51) Int. Cl.: A21D 2/00, A21D 2/08, A21D 8/06, A21D 10/02, A21D 13/00, A23L 5/20

(54) **PRODUCTION METHOD OF ACRYLAMIDE-FREE BAKERY PRODUCTS**
VERFAHREN ZUR HERSTELLUNG VON ACRYLAMIDFREIEN BACKWAREN
PROCÉDÉ DE PRODUCTION DE PRODUITS DE BOULANGERIE SANS ACRYLAMIDE

(30) Priority: 18.01.2013 TR 201300673
(43) Date of publication of application: 25.11.2015
(73) Proprietor: Gokmen, Vural, 06800 Ankara (TR)
(72) Inventor: ATAC MOGOL, Burce, 06800 Ankara (TR); KOCADAGLI, Tolgahan, 06800 Ankara (TR)
(74) Representative: Rapisardi, Mariacristina
(86) International application number: PCT/TR2014/000003
(87) International publication number: WO 2014/112960

(56) References cited:
- EP-A1- 2 074 890
- WO-A1-2004/089111
- US-A1- 2003 219 518
- DATABASE WPI Week 201240 Thomson Scientific, London, GB; AN 2012-F49498 XP002725930, & CN 102 428 988 A (UNIV HENAN TECHNOLOGY) 2 May 2012 (2012-05-02)

## Description

### Field of the Invention

The present invention relates to the production of acrylamide-free bakery products, wherein the formation of acrylamide, which is a carcinogen and neuro-toxic substance is prevented by reducing the thermal load applied during baking.

### Background of the Invention

Baking converts dough that is viscoelastic into solid bakery products that have the desired sensory properties. In the formation of the desired sensorial properties, fine taste, flavor and brown color are created by the Maillard reaction, also known as non-enzymatic browning reaction. However, it is known that there are some unwanted compounds such as acrylamide in this chemical reaction resulting from thermal processing. Acrylamide is a compound classified as "*Probably carcinogenic* to *humans*" (group 2A) by International Agency for Research on Cancer (IARC) and proven to show neurotoxic effects on humans. Taking into consideration the consumption frequencies and amounts of foods such as French fries, bakery products and coffee, which contain a high concentration of acrylamide, it is obviously necessary to reduce the amount of acrylamide in these foods.
Studies are intensively carried out for reducing acrylamide concentrations in various products. There are many patents related to reducing acrylamide formation in bakery products.
The United States patent document no. US20110052758, an application in the state of the art, discloses the reduction of acrylamide formation by the use of asparaginase enzyme. The said document discloses that by using asparaginase, the asparagine amino acid playing a key role in acrylamide formation is converted to aspartic acid.
In the international patent document no. WO2005004629, it is disclosed that enzyme application decreases the level of reducing sugars, which decrease acrylamide formation from asparagine, in a food material.
The United States patent document no US20040126469 and the international patent document no WO2005034649 disclose the fact that polyvalent cations reduce acrylamide formation and the methods thereof.
The United States patent documents no US7267834, US20040109926 and the international patent document no WO2004089111 disclose acrylamide formation can be reduced by addition of various amino acids and vitamins to the formulation, respectively. EP-A-2 074 890 discloses a method for the reduction of acrylamide in carbohydrate-containing food products. CN-A-1024 28 988 discloses a method for preparing bread with decreased acrylamide content. US-A-2003/0219518 discloses a process and apparatus for reducing residual level of acrylamide in heat processed foods. The techniques developed to reduce acrylamide formation in bakery products have some disadvantages. Therefore, they are not accepted as applicable by the industry. The high cost of enzyme applications mentioned above limit their use in low cost bakery products. As the organic acids added to decrease pH in dough cause acidity in taste, they are not suitable for usage in many products. Moreover, this application creates a non-homogenous distribution in the surface color of biscuits. As high amount of amino acid usage is required for the limitation of acrylamide formation by addition of amino acid to the dough formulation, notable changes are seen in the taste of the product.
The international patent document no WO2011063841 discloses the preparation of bakery products by vacuum baking method; however there is no statement for the reduction of acrylamide amount in the product.

### Summary of the Invention

The objective of the present invention is to provide a production method for acrylamide-free bakery product, wherein conventional baking and vacuum baking are used together.

Another objective of the invention is to provide a production for acrylamide-free bakery product, wherein the desired color and aroma are maintained in the final product by adding Maillard reaction products into the dough.

Another objective of the invention is to provide a acrylamide-free bakery product, which has similar color and taste with the bakery products cooked in conventional oven.

### Detailed Description of the Invention

A production method for acrylamide-free bakery product developed to fulfill the objective of the present invention is illustrated in the accompanying figure, in which;

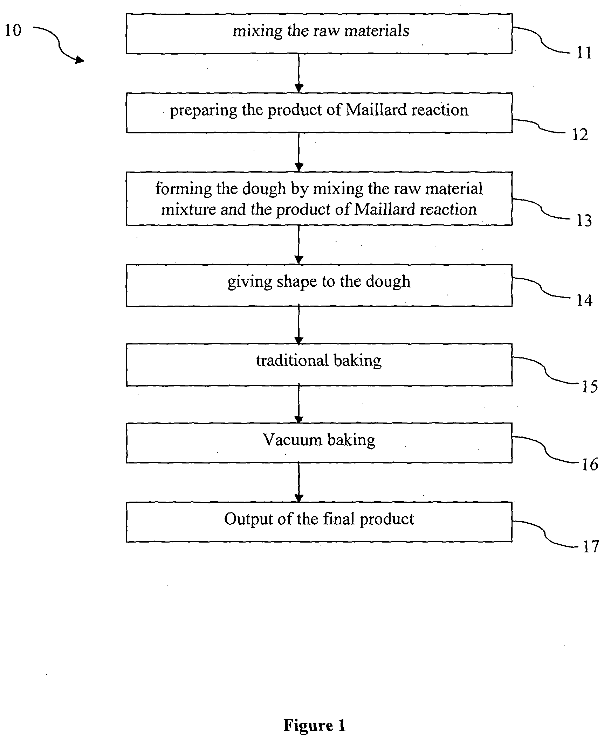

Figure 1 is the view of the flowchart of the method.

The bakery product production method (10) developed to fulfill the objective of the present invention comprises the steps of
- mixing the ingredients (11),
- preparing Maillard reaction products (12)
- forming the dough by mixing the ingredients and the Maillard reaction products (13),
- giving shape to the dough (14),
- conventional baking (15),
- vacuum baking (16),
- output of the final product (17).

In the inventive production method for acrylamide-free bakery product (10), firstly, the ingredients forming the dough are prepared to be weighed (11). The said ingredients are flour, oil, water and baking agent. Optionally, salt and/or sugar (sucrose) can also be added to the dough. In the preferred embodiment of the invention, in the mixture there are 45-65% flour, 10-20% oil, 10-25% water, 0.5-1% carbonate, 0-25% sucrose and 0-1% salt by mass. In an embodiment of the invention, in the raw material mixture there are 50-55% flour, 10-15% oil, 10-15% water, 0.4-0.6% sodium bicarbonate, 0.2-0.3% ammonium bicarbonate, 20-35% sucrose and 0.5-1% salt by mass.

After the ingredient mixture is prepared, the Maillard reaction products that give color and aroma to the final product is prepared (12). In an embodiment of the invention, the said material is obtained by preheating the dough, which is formed by the ingredients used in the step of mixing the ingredients (11), at 180°C-240°C temperature for 30-60 minutes, and then grinding the brown colored solid product obtained after the heating (12). In another embodiment of the invention; the said material is obtained in brown color and liquid form by mixing protein hydrolysate (5g/100ml water) and reducing sugar (1g/100ml water) and preheating them at 180°C-220°C for 6-12 hours (12).

Then, the prepared ingredient mixture and the Maillard reaction products are combined and mixed, thus a homogenous dough is obtained (13). In an embodiment of the invention, the Maillard reaction products, which is obtained in brown color and solid form and grinded, is added into ingredient mixture in 0.5-1% ratio by mass. In another embodiment of the invention, the Maillard reaction products, which is obtained in brown color and liquid form, is added into and mixed with ingredient mixture in 5-10% ratio by mass.

The dough prepared by the mixing process (13) are cut into pieces in desired portions and then shaped (14). In the preferred embodiment of the invention, the dough is cut in round form of 2-4 mm thickness and 4-6 cm diameter.

The shaped doughs are exposed to partial baking process in conventional oven at 220-230°C temperature for 2-4 minutes. The partially baked doughs are kept in vacuum oven under 100-500 mbar pressure, at 160-180°C temperatures for 4-6 minutes. Thus, the thermal load applied to the prepared doughs is decreased and a combined baking process is applied.

The moisture content of the bakery product obtained by this method is below 3%.

In the preferred embodiment of the invention, the final product (17) obtained after the combined baking steps is acrylamide-free biscuits

The combined usage of conventional and vacuum oven baking technologies enables to decrease the thermal processing load during the baking and to produce biscuits that have suitable textural features. In the inventive method, besides preventing the formation of acrylamide in biscuits by decreasing the thermal load during baking, the formation of some other undesired compounds such as 5-hydroxymethylfurfural, which emerge due to the baking process performed in high temperatures is prevented.

As it is known, thermal processing (baking) enables to create the desired taste, smell and color in bakery products such as biscuits. The deficiency of brown color, taste and smell which occur by decreasing the thermal processing load can be removed by the Maillard reaction products that are added to the dough in the step of forming the dough (13).

## Claims

1. Bakery product production method (10) comprising the steps of;
- mixing the ingredients (11),
- preparing the Maillard reaction products (12)
- forming the dough by mixing the ingredient mixture and Maillard reaction products (13),
- giving shape to the dough (14),
- conventional baking (15),
- vacuum baking (16),
- output of the final product (17); and **characterized by** the step of mixing the ingredients (11) wherein 45-65% flour, 10-20% oil, 10-25% water, 0.5-1% baking agent, 0-25% sucrose and 0-1% salt by mass are used.

2. Production method for acrylamide-free bakery product (10), according to Claim 1, **characterized by** the step of preparing the Maillard reaction products (12) wherein the brown colored solid product, which is obtained by preheating the dough formed by the ingredients used in the step of mixing the ingredients (11) at 180°C-240°C temperature for 30-60 minutes.

3. Production method for acrylamide-free bakery product (10) according to Claim 2, **characterized by** the step of forming the dough by mixing the ingredient mixture and Maillard reaction products (13), wherein the Maillard reaction products, which is obtained in brown color and solid form and grinded, is added into ingredient mixture in 0.5-1% ratio by mass.

4. Production method for acrylamide-free bakery product (10), according to Claim 1, **characterized by** the step of preparing the Maillard reaction products (12) wherein the material is obtained in brown color and liquid form by mixing protein hydrolysate (5g/100ml water) and reducing sugar (1g/100ml water) and preheating them at 180°C-220°C temperature for 6-12 hours.

5. Production method for acrylamide-free bakery product (10) according to Claim 4, **characterized by** the step of forming the dough by mixing the ingredient mixture and the Maillard reaction products (13), wherein the Maillard reaction products, which is obtained in brown color and liquid form, is added into and mixed with ingredient mixture in 5-10% ratio by mass.

6. Production method for acrylamide-free bakery product (10) according to any one of the preceding claims, **characterized by** the step of giving shape to the dough (14), wherein the dough which is obtained in the step of forming the dough by mixing the ingredient mixture and Maillard reaction products (13) is cut in round form of 2-4 mm thickness and 4-6 cm diameter.

7. Production method for acrylamide-free bakery product (10) according to any one of the preceding claims, **characterized by** the step of conventional baking (15) wherein the shaped doughs are exposed to partial baking process in conventional oven at 220-230°C temperature for 2-4 minutes.

8. Production method for acrylamide-free bakery product (10) according to any one of the preceding claims, **characterized by** the step of vacuum baking (16) wherein the partially baked doughs are kept in vacuum oven under 100-500 mbar pressure, at 160-180°C temperatures for 4-6 minutes.

9. Production method for acrylamide-free bakery product (10) according to any one of the preceding claims, **characterized in that** biscuit is obtained and the bakery product in the step of output of the final product (17) together with mixing 50-55% flour, 10-15% oil, 10-15% water, 0.4-0.6% sodium bicarbonate, 0.2-0.3% ammonium bicarbonate, 20-35% sucrose and 0.5-1% salt by mass are mixed in the step of mixing the ingredients (11).

## Patentansprüche

1. Verfahren zur Herstellung von Backwaren (10), umfassend die Schritte von;
- Mischen der Zutaten (11),
- Vorbereiten der Maillard-Reaktionsprodukte (12)
- Formen des Teigs durch Mischen der Zutatenmischung und der Maillard-Reaktionsprodukte (13),
- Formgeben des Teigs (14),
- konventionelles Backen (15),
- Vakuumbacken (16),
- Ausstoss des Endprodukts (17); und **gekennzeichnet durch** den Schritt von
- Mischen der Zutaten (11), wobei 45-65% Mehl, 10-20% Öl, 10-25% Wasser, 0,5-1% Backmittel, 0-25% Saccharose und 0-1% Salz nach Masse verwendet werden.

2. Verfahren zur Herstellung von acrylamidfreien Backwaren (10) nach Anspruch 1, **gekennzeichnet durch** den Schritt des Vorbereitens der Maillard-Reaktionsprodukte (12), wobei das braun gefärbte feste Produkt, das durch Vorwärmen des Teigs erhalten wird, der durch die im Schritt des Mischens der Zutaten (11) verwendeten Zutaten bei 180 °C-240 °C Temperatur für 30-60 Minuten geformt wird.

3. Verfahren zur Herstellung von acrylamidfreien Backwaren (10) nach Anspruch 2, **gekennzeichnet durch** den Schritt des Formens des Teigs durch Mischen der Zutatenmischung und der Maillard-Reaktionsprodukte (13), wobei die in brauner Farbe und fester Form erhaltenen und gemahlenen Maillard-Reaktionsprodukte in die Zutatenmischung im Masseverhältnis von 0,5-1% zugegeben werden.

4. Verfahren zur Herstellung von acrylamidfreien Backwaren (10) nach Anspruch 1, **gekennzeichnet durch** den Schritt des Vorbereitens der Maillard-Reaktionsprodukte (12), wobei das Material in brauner Farbe und flüssiger Form durch Mischen des Proteinhydrolysats (5 g/100 ml Wasser) und durch Reduzieren des Zuckers (1 g/100 ml Wasser) und durch deren Vorwärmen bei 180 °C-220 °C für 6-12 Stunden erhalten wird.

5. Verfahren zur Herstellung von acrylamidfreien Backwaren (10) nach Anspruch 4, **gekennzeichnet durch** den Schritt des Formens des Teigs durch Mischen der Zutatenmischung und der Maillard-Reaktionsprodukte (13), wobei die in brauner Farbe und flüssiger Form erhaltenen Maillard-Reaktionsprodukte in die Zutatenmischung im Masseverhältnis von 5-10% zugegeben und gemischt werden.

6. Verfahren zur Herstellung von acrylamidfreien Backwaren (10) nach einem der vorhergehenden Ansprüche, **gekennzeichnet durch** den Schritt des Formgebens des Teigs (14), wobei der Teig, der im Schritt des Teigformens durch Mischen der Zutatenmischung und der Maillard-Reaktionsprodukte (13) erhalten wird, in runder Form von 2-4 mm Dicke und 4-6 cm Durchmesser geschnitten wird.

7. Verfahren zur Herstellung von acrylamidfreien Backwaren (10) nach einem der vorhergehenden Ansprüche, **gekennzeichnet durch** den Schritt des konventionellen Backens (15), wobei die geformten Teige im konventionellen Ofen bei 220-230 °C Temperatur für 2-4 Minuten einem partiellen Backprozess ausgesetzt werden.

8. Verfahren zur Herstellung von acrylamidfreien Backwaren (10) nach einem der vorhergehenden Ansprüche, **gekennzeichnet durch** den Schritt des Vakuumbackens (16), wobei die teilweise gebackenen Teige im Vakuumofen unter 100-500 mbar Druck bei 160-180 °C Temperaturen für 4-6 Minuten gehalten werden.

9. Verfahren zur Herstellung von acrylamidfreien Backwaren (10) nach einem der vorhergehenden Ansprüche, **dadurch gekennzeichnet, dass** Kekse erhalten werden und die Backwaren im Schritt des Ausstosses des Endproduktes (17) zusammen unter Mischen von 50-55% Mehl, 10-15% Öl, 10-15% Wasser, 0,4-0,6 % Natriumbicarbonat, 0,2-0,3 % Ammoniumbicarbonat, 20-35 % Saccharose und 0,5-1 % Salz nach Masse im Schritt des Mischens der Zutaten (11) gemischt werden.

## Revendications

1. Procédé de production de produit de boulangerie (10) comprenant les étapes de ;
- mélanger les ingrédients (11),
- préparer les produits de la réaction de Maillard (12),
- former la pâte en mélangeant le mélange d'ingrédients et les produits de la réaction de Maillard (13),
- donner une forme à la pâte (14),
- cuire de façon conventionnelle (15),
- étuver sous vide (16),
- sortir le produit final (17) ; et **caractérisé par** l'étape de
- mélanger les ingrédients (11) dans lesquels 45-65 % de farine, 10-20 % d'huile, 10-25 % d'eau, 0,5-1 % d'agent de cuisson, 0-25 % de saccharose et 0-1 % de sel par masse sont utilisés.

2. Procédé de production de produit de boulangerie sans acrylamide (10) selon la revendication 1, **caractérisé par** l'étape consistant à préparer les produits de la réaction de Maillard (12) dans laquelle le produit solide de couleur brune, qui est obtenu par préchauffage de la pâte formée par les ingrédients utilisés dans l'étape consistant à mélanger les ingrédients (11) à une température de 180-240 °C pendant 30-60 minutes.

3. Procédé de production de produit de boulangerie sans acrylamide (10) selon la revendication 2, **caractérisé par** l'étape consistant à former la pâte en mélangeant le mélange d'ingrédients et les produits de la réaction de Maillard (13), dans lequel les produits de la réaction de Maillard, qui sont obtenus sous une forme solide, de couleur brune et moulus, sont ajoutés au mélange d'ingrédients dans un rapport massique de 0,5-1 %.

4. Procédé de production de produit de boulangerie sans acrylamide (10) selon la revendication 1, **caractérisé par** l'étape consistant à préparer les produits de la réaction de Maillard (12), dans lequel la matière est obtenue sous forme liquide et de couleur brune en mélangeant de l'hydrolysat de protéines (5 g/100 ml d'eau) et du sucre réducteur (1 g/100 ml d'eau) et en les préchauffant à une température de 180-220 °C pendant 6-12 heures.

5. Procédé de production de produit de boulangerie sans acrylamide (10) selon la revendication 4, **caractérisé par** l'étape consistant à former la pâte en mélangeant le mélange d'ingrédients et les produits de la réaction de Maillard (13), dans lequel les produits de la réaction de Maillard, qui sont obtenus sous une forme liquide et de couleur brune, sont ajoutés et mélangés au mélange d'ingrédients dans un rapport massique de 5-10 %.

6. Procédé de production de produit de boulangerie sans acrylamide (10) selon l'une quelconque des revendications précédentes, **caractérisé par** l'étape consistant à donner une forme à la pâte (14), dans lequel la pâte qui est obtenue à l'étape consistant à former la pâte en mélangeant le mélange d'ingrédients et les produits de la réaction de Maillard (13) est coupée en forme ronde d'une épaisseur de 2-4 mm et d'un diamètre de 4-6 cm.

7. Procédé de production de produit de boulangerie sans acrylamide (10) selon l'une quelconque des revendications précédentes, **caractérisé par** l'étape de cuisson conventionnelle (15), dans lequel les pâtes formées sont exposées à un processus de cuisson partiel dans un four conventionnel à une température de 220-230 °C pendant 2-4 minutes.

8. Procédé de production de produit de boulangerie sans acrylamide (10) selon l'une quelconque des revendications précédentes, **caractérisé par** l'étape d'étuvage à vide (16), dans lequel les pâtes partiellement cuites sont conservées dans une étuve à vide à une pression de 100-500 mbars à une température de 160-180 °C pendant 4-6 minutes.

9. Procédé de production de produit de boulangerie sans acrylamide (10) selon l'une quelconque des revendications précédentes, **caractérisé en ce que** le biscuit est obtenu et le produit de boulangerie dans l'étape consistant à sortir le produit final (17) avec le mélange de 50-55 % de farine, 10-15 % d'huile, 10-15 % d'eau, 0,4-0,6 % de bicarbonate de sodium, 0,2-0,3 % de bicarbonate d'ammonium, 20-35 % de saccharose et 0,5-1 % de sel par masse étant mélangé à l'étape de mélange des ingrédients (11).
